## Europäisches Patentamt

## European Patent Office

## Office européen des brevets

(19)

(11) Veröffentlichungsnummer: **0 222 295**
**B1**

(12) **EUROPÄISCHE PATENTSCHRIFT**

(45) Veröffentlichungstag der Patentschrift:
24.10.90

(51) Int. Cl.⁵: **B65D 65/40**, B32B 27/32

(21) Anmeldenummer: **86115240.3**

(22) Anmeldetag: **04.11.86**

(54) Mehrschichtige Verpackungsfolie mit überlegener Kratzfestigkeit.

(30) Priorität: **13.11.85 DE 3540215**

(43) Veröffentlichungstag der Anmeldung:
**20.05.87 Patentblatt 87/21**

(45) Bekanntmachung des Hinweises auf die Patenterteilung:
**24.10.90 Patentblatt 90/43**

(84) Benannte Vertragsstaaten:
**BE DE ES FR GB IT NL**

(56) Entgegenhaltungen:
**DE-A- 2 165 428**
**DE-A- 3 247 998**
**DE-B- 1 228 056**

(73) Patentinhaber: **HOECHST AKTIENGESELLSCHAFT,
Postfach 80 03 20, D-6230 Frankfurt am Main 80(DE)**

(72) Erfinder: **Crass, Günther, Bachstrasse 7,
D-6204 Taunusstein 4(DE)**
Erfinder: **Mauer, Rudi, Chattenstrasse 34,
D-6500 Mainz-Weisenau(DE)**
Erfinder: **Bothe, Lothar, Dr., Am Heiligenhaus 9,
D-6500 Mainz-Gonsenheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine siegelbare, transparente Mehrschichtfolie, bestehend aus einer Basisschicht aus im wesentlichen Polypropylen, die beidseitig mit weiteren polyolefinischen Schichten überzogen ist.

Aus der deutschen Offenlegungsschrift 16 94 694 sind heißsiegelbare Schichtstoffe bekannt, die aus einer orientierten Polypropylenfolie bestehen, die mindestens eine heißsiegelfähige Schicht aus einem Ethylen-Propylen-Copolymeren aus 2 bis 6 Gew.-% Ethylen und 98 bis 94 Gew.-% Propylen enthält. Diese Folien besitzen zwar eine gute Heißsiegelbarkeit, jedoch sind sie nicht im erwünschten Maße klar und kratzfest und zeigen zudem ungenügende Verarbeitungseigenschaften auf schnellaufenden Verpackungsmaschinen.

Aus der europäischen Patentschrift 27 586 sind siegelbare Polypropylenfolien bekannt, die eine Siegelschicht aus einem Ethylen-Homo- oder Copolymerisat besitzen, die mit einem langkettigen aliphatischen Amin, einer unverträglichen thermoplastischen Komponente und einem Polydialkylsiloxan ausgerüstet sind. Diese Folien stellen zwar eine Verbesserung im Vergleich zur deutschen Offenlegungsschrift 16 94 694 dar, besitzen aber noch eine unzureichende Laufsicherheit auf horizontalen Form-Füll-Schließ-Maschinen.

Aus der deutschen Offenlegungsschrift 29 41 140 ist ein Verpackungsmaterial bekannt, welches aus einer Grundschicht aus einem Propylenpolymerisat und aus einer Oberflächenschicht besteht, die aus einem Gemisch eines Propylen-Ethylen-Copolymerisats und eines $(C_4-C_{10})$-$\alpha$-Olefin-Propylen-Copolymerisats besteht. Diese Oberflächenschicht kann auch ein niedrigmolekulares thermoplastisches Harz sowie Silikonöle enthalten. Derartige Verpackungsmaterialien weisen den Nachteil auf, daß sie kratzempfindlich sind und noch unbefriedigende optische Eigenschaften besitzen.

In der DE-OS 32 47 998 wird eine Folie vorgeschlagen, die Siegelschichten aus einem polyolefinischen Copolymeren bzw. Terpolymeren besonderer Zusammensetzung besitzt und durch Modifizierung mit einem Propylen-Homopolymeren, einem Dimethylpolysiloxan und einem synthetischen Harz neben guten Verarbeitungseigenschaften auf schnellaufenden Verpackungsmaschinen ein verbessertes optisches Aussehen aufweist. Diese Folie erfüllt zwar die Anforderungen, die maschinentechnisch an eine Verpackungsfolie gestellt werden, jedoch ist die Handhabung der Folie durch die extrem glatten Oberflächen mit sehr geringen Reibungskoeffizienten mit erheblichen Problemen behaftet. So resultiert beim Schneiden dieser Folien von der Originalrollenbreite (4 - 6 m) auf kleinere Breiten ein erhöhter seitlicher Verlauf, d.h. die gewünschte Breite wird, bedingt durch ein seitliches Ausweichen der Folie bei den hohen Geschwindigkeiten, nicht exakt erzielt, sondern um ein mehr oder weniger hohes Maß überschritten. Im Zusammenhang mit dem Schneide- und Aufwickelvorgang soll im folgenden der Ausdruck "Konfektionierung" verwendet werden.

Ein weiterer Nachteil der vorstehend beschriebenen Folie ist in ihrer hohen Teleskopierneigung auf der Rolle bei der Handhabung entweder schon auf der Schneidemaschine oder aber beim Einlegen in die Verpackungsmaschine zu sehen. Unter dem Begriff des Teleskopierens ist eine seitliche Verschiebung der Folie auf der Rolle zu verstehen, bei der jeweils aufeinanderliegende Oberflächen nach einer Seite abgleiten, wodurch bewirkt wird, daß die Ränder der Folie nicht mehr exakt übereinanderliegen, sondern jeweils um eine geringe Strecke in eine Richtung versetzt sind, und die gesamte Rolle dadurch auf einer Seite ein mehr oder weniger großes Stück über den Wickelkern hinausragt. Das Teleskopieren tritt normalerweise beim Anstoßen der Rollen oder bei geringen Schrägneigungen auf.

Bedingt durch diese Schwierigkeiten muß die Maschinengeschwindigkeit beim Konfektionieren auf ca. die Hälfte des Normalwertes gesenkt werden, die weitere Handhabung der Rollen ist mit äußerster Vorsicht durchzuführen.

In der DE-OS 33 31 983 wird eine siegelbare polyolefinische Mehrschichtfolie mit guten Verarbeitungseigenschaften auf schnellaufenden Verpackungsmaschinen beschrieben, die gleichzeitig eine gute Konfektionierbarkeit sowie keine Teleskopierneigung zeigt. Die Kratzfestigkeit dieser Folie ist allerdings noch verbesserungswürdig.

Die vorliegende Erfindung hat sich deshalb die Aufgabe gestellt, eine siegelbare transparente polyolefinische Mehrschichtfolie zu schaffen mit guten Verarbeitungseigenschaften auf schnellaufenden Verpackungsmaschinen, die gleichzeitig eine gute Konfektionierbarkeit sowie keine Teleskopierneigung zeigt und darüber hinaus auch noch überlegene Kratzfestigkeit besitzt.

Gelöst wird die vorstehend genannte Aufgabe durch eine Folie der eingangs genannten Gattung, deren kennzeichnende Merkmale darin zu sehen sind, daß die Basisschicht auf ihren beiden Oberflächen mit Schichten aus Polypropylen überzogen ist, welches als Zuschlagstoffe

i) 0,1 bis 1 Gew.-% eines anorganischen Pigmentes und
ii) 0,2 bis 1 Gew.-% eines Oxyalkylamins enthält, bezogen jeweils auf das Gesamtgewicht der Schichten, und daß beide freien Oberflächen der Schichten aus Polypropylen mit siegelbaren Deckschichten überzogen sind, die aus einer Kombination von

a) 68,5 bis 89,7 Gew.-% einer Olefinharzzusammensetzung, bestehend aus einem Co- oder Terpolymeren aus Ethylen, Propylen, Butylen oder weiteren α-Olefinen mit 5 bis 10 C-Atomen oder Mischungen daraus,

b) 5 bis 15 Gew.-% eines niedermolekularen, mit der Olefinharzzusammensetzung verträglichen Harzes,

c) 5 bis 15 Gew.-% eines Propylenhomopolymeren und

d) 0,3 bis 1,5 Gew.-% eines Polydiorganosiloxans, bezogen jeweils auf das Gesamtgewicht der siegelbaren Deckschichten, bestehen.

Die Basisschicht der siegelbaren Mehrschichtfolie besteht aus einem Propylenhomopolymeren oder aus einem Polymeren, das zum überwiegenden Teil aus Propylen besteht und einen Schmelzpunkt von 140°C oder höher, vorzugsweise einen Schmelzpunkt von 150°C oder höher, besitzt.

Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Polypropylen mit $(C_4-C_8)$-α-Olefinen mit einem $(C_4-C_8)$-α-Olefingehalt von 10 Gew.-% oder weniger stellen spezielle Beispiele für das Propylenpolymere der Basisschicht dar.

Das Propylenpolymere der Basisschicht hat zweckmäßig einen Schmelzflußindex von 0,5 g /10 min bis 8 g/10 min bei 230°C und 2,16 kp Belastung (DIN 53735), insbesondere von 1,5 g/10 min bis 4 g/10 min.

Das Polypropylen der Basisschicht enthält außer einer notwendigen Stabilisierung bevorzugt keine Zuschlagstoffe.

Für die Schichten aus Polypropylen, die die Basisschicht auf ihren beiden Oberflächen überziehen, wird bevorzugt das gleiche Polypropylen eingesetzt wie für die Basisschicht, wobei dieses Polypropylen allerdings als Zuschlagstoffe sowohl ein anorganisches Pigment als auch ein Oxyalkylamin in den bereits angegebenen Mengen enthält.

Als anorganische Pigmente können insbesondere Siliziumdioxid, Calciumcarbonat, Aluminiumsilikat verwendet werden, bevorzugt ist Aluminiumsilikat. Das anorganische Pigment soll in Form kleiner Teilchen in gleichmäßiger Verteilung vorliegen, die mittleren Teilchendurchmesser betragen hierbei 0,1 bis 3,0 µm, bevorzugt 0,2 bis 1,5 µm.

Als Oxyalkylaminzuschlagstoffe können insbesondere langkettige aliphatische tertiäre Amine, die gegebenenfalls einfach ungesättigt sind, vorzugsweise tertiäre Amine, deren längste Kette eine Anzahl von C-Atomen im Bereich von 12 bis 18 aufweist, eingesetzt werden. Besonders bevorzugt sind N,N-Bisethoxyalkylamine, z. B. Armostat [R] 300.

Die für die siegelbaren Deckschichten erfindungsgemäß eingesetzten Olefinharzzusammensetzungen können aus Co- oder Terpolymeren aus Ethylen, Propylen, Butylen oder weiteren α-Olefinen mit bis zu 10 C-Atomen oder auch aus Mischungen daraus bestehen. Die Zusammensetzung ist so wie sie üblicherweise für Siegelschichten verwendet wird. Gewöhnlich kommt dafür ein Copolymeres aus Ethylen und Propylen mit einem Ethylengehalt zwischen 3 und 10 Gew.-% zur Anwendung, es können aber genauso auch Copolymere aus Ethylen und Butylen oder Mischungen aus Ethylen-Butylen-Copolymeren mit Ethylen-Propylen-Butylen-Terpolymeren verwendet werden. Der Schmelzpunkt derartiger Harze liegt bei 130°C oder höher, der Schmelzflußindex im Bereich zwischen 0,1 und 16 g/10 min bei 230°C und 2,16 kp Belastung (DIN 53735).

Bei dem erfindungsgemäß eingesetzten niedrigmolekularen, mit der Olefinharzzusammensetzung verträglichen Harz handelt es sich um ein natürliches oder synthetisches Harz. Das Harz hat einen Erweichungspunkt von 60 bis 180°C (bestimmt nach DIN 1995-U4), bevorzugt von 80 bis 130°C.

Unter verträglichen Harzen sind solche Harze zu verstehen, die, wenn sie als solche in einer Konzentration von bis zu 15 Gew.-% der Olefinharzzusammensetzung der Siegelschicht zugemischt werden, keine Verschlechterung der Trübung der Folie bewirken.

Bei den zur Modifizierung des Polyolefins zugegebenen natürlichen oder synthetischen Harzen handelt es sich um die bekannten sogenannten harten Harze. Dazu zählen beispielsweise Kohlenwasserstoff-Harze wie Cumaronharze, Erdölharze und Terpenharze, Ketonharze, Polyamidharze, Aldehydharze wie Xylol-Formaldehydharze und Naphthalinformaldehydharze, Dammarharze und Kolophonium.

Cumaronharze werden meist durch Polymerisation von entphenolten und entbasten Fraktionen des Steinkohlenteer-Leichtöls gewonnen, die beispielsweise Inden, Styrol, Dicyclopentadien, Cumaron und deren Homologe als ungesättigte Verbindungen enthalten. Durch Copolymerisation, beispielsweise mit Phenol, ist eine vielseitige Modifikation möglich.

Die Rohstoffbasis der Erdölharze wird bei der Krackung von Naphtha- oder Gasöl auf Rohstoffe der chemischen Industrie wie Ethylen und Propylen gewonnen. Es handelt sich beispielsweise um harzbildende Verbindungen wie Buten, Butadien, Penten, Piperylen, Isopren, Cyclopentadien, Dicyclopentadien, Alkylbenzole, Methyldicyclopentadien, Methylinden, Naphthalin, Styrol, Inden, Vinyltoluol und Methylstyrol.

Bei Terpenharzen handelt es sich um Polymerisate von Terpenen. Als Beispiele für geeignete Terpene seien beta-Pinen, Dipenten, Limonen, Myrcen, Bronylen, Camphen und ähnliche Terpene genannt.

Die Kohlenwasserstoff-Harze können beispielsweise durch Reaktion der Rohstoffe vor der Polymerisation, durch Einführung spezieller Monomerer oder durch Reaktion des polymerisierten Produktes modifiziert werden. Eine bevorzugte Modifizierungsart ist die Hydrierung oder Teilhydrierung ungesättigter Bestandteile der Harze.

Dammarharze werden durch Lebendharzung von Bäumen der Familie Dipterocarpaicae gewonnen.

Kolophonium ist ein natürliches Harz, das aus dem Rohbalsam der Koniferen (Balsamharz), dem Extrakt der Koniferenstubben (Wurzelharz) oder aus Tallöl (Tallharz) gewonnen wird und im wesentlichen aus Abietinsäure und deren Isomeren besteht. Es kann sich auch um modifiziertes Kolophonium handeln, das durch Polymerisieren, Hydrieren, Dehydrieren, Oxidieren, Decarboxilieren, Verseifen, Verestern, Isomerisieren oder Disproportionieren von Kolophonium entsteht.

Bevorzugte Harze sind Styrolpolymerisate, alpha-Methylstyrol-Styrolcopolymerisate, alpha-Methylstyrol-Vinyltoluol-Copolymerisate, hydrierte alpha-Methylstyrol-Vinyltoluol-Inden-Copolymerisate, Pentadienpolymerisate, hydrierte Cyclopentadien-Polymerisate, alpha-Pinen- oder beta-Pinen-Polymerisate, Terpenpolymerisate, Kolophonium und modifiziertes Kolophonium.

Die Untergrenze von 5 Gew.-%, bezogen auf das Gesamtgewicht der siegelbaren Deckschichten, des niedermolekularen, mit der Olefinharzzusammensetzung verträglichen Harzes sollte nicht unterschritten werden, da erst bei höheren Anteilen die Auswirkung des Harzzusatzes auf die optischen Eigenschaften und die Kratzempfindlichkeit in Erscheinung tritt.

Mehr als 15 Gew.-%, bezogen auf das Gesamtgewicht der siegelbaren Deckschichten, an niedermolekularem, mit der Olefinharzzusammensetzung verträglichem Harz haben sich aus verfahrenstechnischen Gründen als unzweckmäßig erwiesen.

Das als Komponente c) der siegelbaren Deckschichten eingesetzte Polypropylenhomopolymer sollte eine Schmelztemperatur, die oberhalb der Schmelztemperatur der Komponente a) liegt, besitzen. Bei Zusätzen von weniger als 5 Gew.-% an Propylenhomopolymeren ergeben sich nur geringfügige Verbesserungen der optischen Eigenschaften sowie der Kratzfestigkeit und noch nicht ausreichende Verbesserungen der Maschinengängigkeit an schnellaufenden Verpackungsmaschinen. Zusätze von mehr als 15 Gew.-% würden zwar die optischen Eigenschaften, die Kratzfestigkeit und die Maschinengängigkeit weiter verbessern, jedoch tritt dann eine merkliche Verschlechterung der Siegeleigenschaften ein.

Erfindungsgemäß können Polydiorganosiloxane oder deren Mischungen eingesetzt werden, die bei 25°C eine Viskosität von mindestens 100 mm²/sec aufweisen. Als Beispiele für geeignete Polydiorganosiloxane sind Polydialkylsiloxane, Polyalkylphenylsiloxane, olefinmodifizierte Siloxanöle, polyethermodifizierte Siliconöle, olefin/polyethermodifizierte Silikonöle, epoxymodifizierte Silikonöle und alkoholmodifizierte Silikonöle, Polydialkylsiloxane mit vorzugsweise $C_1$ bis $C_4$ in der Alkylgruppe, insbesondere Polydimethylsiloxane, hervorzuheben.

Weniger als 0,3 Gew.-%, bezogen auf die siegelbare Schicht, an Polydiorganosiloxan sollten als Komponente d) nicht enthalten sein, da dies bei der beschriebenen Rohstoffkombination noch zu erhöhten Aussortierungen an den schnellaufenden Verpackungsmaschinen führt, während größere Mengen als 1,5 Gew.-%, bezogen auf die siegelbare Schicht, an Polydiorganosiloxan zu verfahrenstechnischen Schwierigkeiten bei der Folienherstellung und zu Fehleinschlägen in den Verpackungsmaschinen infolge zu geringer Reibung führen.

Die im vorstehenden in allen Einzelheiten beschriebene fünfschichtige Verpackungsfolie wird nach dem Verfahren der Coextrusion hergestellt, bei dem die die einzelnen Schichten der Folie bildenden Polymeren oder Zusammensetzungen in getrennten Extrudern aufgeschmolzen werden und die Schmelzen dann entweder in einer Mehrschichtdüse oder nach dem Adapterverfahren zu einer Vorfolie ausgepreßt und abgeschreckt werden. Die Vorfolie wird danach, um ihr die gewünschte Festigkeit und Dimensionsstabilität zu verleihen, biaxial streckorientiert und hitzefixiert. Auf diese Weise hergestellte Folien weisen eine Gesamtdicke im Bereich von 10 bis 50 µm, bevorzugt von 15 bis 35 µm, auf. Die siegelbaren Deckschichten sollen erfindungsgemäß jeweils Dicken von höchstens bis zu 3 µm aufweisen, vorzugsweise besitzen sie Dicken im Bereich von 0,2 bis 1 µm.

Die mit der Basisschicht in direktem Kontakt stehenden Schichten aus Polypropylen mit Zuschlagstoffen sollen erfindungsgemäß ebenfalls jeweils Dicken von höchstens bis zu 3 µm aufweisen, vorzugsweise besitzen sie Dicken im Bereich von 0,5 bis 1,5 µm.

Die Erfindung soll nachfolgend durch den Vergleich mit dem Stand der Technik beispielhaft noch näher erläutert werden.

Beispiel 1

Mit Hilfe des Coextrusionsverfahrens wurde aus einer Breitschlitzdüse von 280 mm Breite und 1,8 mm Spalthöhe bei einer Extrusionstemperatur von 260°C und einer Fördermenge von 70 kg/h eine 1 mm dicke Mehrschichtfolie extrudiert, deren Basis aus Polypropylen mit einem Schmelzflußindex von 2 g/10 min bestand und die beidseitig mit den verschiedenen beiden Außenschichten überzogen war. Diese Folien wurden nach Durchlaufen einer 20 mm langen Luftstrecke auf einer 30°C warmen Kühlwalze des Durchmessers 600 mm abgeschreckt, die mit einer Umfangsgeschwindigkeit von 4,5 m/min lief. Danach wurden die Folien von der Kühlwalze auf ein Walzentrio von ebenfalls 30°C und einer Umfangsgeschwindigkeit von ebenfalls 4,5 m/min übergeben und dann nach Erwärmung auf 130°C von einem weiteren Walzentrio um den Faktor 5 längsgestreckt. Anschließend wurden sie bei 175°C Lufttemperatur um das 10fache in Querrichtung verstreckt.

Die so gebildete Mehrschichtfolie hatte eine Basisschicht aus Polypropylen mit einer Dicke von etwa 17 µm. Auf beiden Seiten der Basisschicht befanden sich die Schichten mit den Zuschlagstoffen, die je-

weils Schichtdicken von 1 μm aufwiesen. Die Schichten bestanden aus:
99,1 Gew.-% Propylenhomopolymerisat,
0,4 Gew.-% Aluminiumsilikat,
0,5 Gew.-% Armostat $^{(R)}$ 300.

Auf den Schichten mit den Zuschlagstoffen befanden sich jeweils die siegelbaren Deckschichten, die Schichtdicken von jeweils ungefähr 0,5 bis 0,8 μm aufwiesen. Die siegelbaren Deckschichten bestanden aus:
79,3 Gew.-% Copolymerisat aus Ethylen und Propylen mit einem Ethylengehalt von 4,5 Gew.-%, bezogen auf das Gewicht des Copolymerisats,
10,0 Gew.-% Propylenhomopolymerisat,
0,7 Gew.-% Polydimethylsiloxan und
10,0 Gew.-% Arkon $^{(R)}$ P 125, einem hydrierten Kohlenwasserstoffharz mit einem Erweichungspunkt von 125°C.

An dieser Folie wurden verschiedene Messungen durchgeführt, deren Ergebnisse in der Tabelle am Ende der Beschreibung zusammengefaßt sind.

Die einzelnen Messungen wurden nach folgenden Methoden vorgenommen:

Schmelzflußindex - DIN 53735 bei 230°C und 2,16 kp Belastung

Erweichungspunkt - DIN 1995-U4

Schmelzpunkt - DSC-Messung, Maximum der Schmelzkurve, Aufheizgeschwindigkeit 20°C/min.

Trübung:

Die Trübung der Folie wird in Anlehnung an ASTM-D 1003-52 gemessen, wobei an Stelle einer 4°-Lochblende eine 1°-Spaltblende eingesetzt wird und die Trübung in Prozent für vier übereinanderliegende Folienlagen angegeben wird. Die vier Lagen wurden gewählt, da man hierdurch den optimalen Meßbereich ausnutzt.

Glanz:

Der Glanz wird mit einem Reflektometer, Typ RGN 10.01.02 nach Dr. Schwarzau, Berlin, mit einer planen, polierten schwarzen Glasplatte als Standard gemessen.

Kratzfestigkeit bzw. Kratzempfindlichkeit:

Die Kratzfestigkeit wird in Anlehnung an DIN 53754 bestimmt.

Für die Bestimmung der Kratzfestigkeit wird das Abriebmeßgerät Taber Model 503 Abraser der Fa. Teledyne Taber benutzt, wobei Reibräder der Marke Calibrade $^{(R)}$ H18, die mit 250g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers.

Die Antistatik der Folien wurde mit dem Aschentest beurteilt. Durch dreimaliges Reiben mit einem Wolltuch in einer Richtung wird eine Ladung der Folie erzeugt. Die Antistatik ist gut, wenn Zigarettenasche aus 3 cm Entfernung von der geriebenen Folienoberfläche nicht angezogen wird, und ungenügend, wenn die Asche angezogen wird.

Beispiel 2, Vergleichsbeispiel

Zum Vergleich wurde nach dem gleichen Verfahren wie in Beispiel 1 eine Folie nach dem nächstkommenden Stand der Technik (DE-OS 33 31 983) hergestellt.

Die Vergleichsfolie besaß einen dreischichtigen Aufbau mit einer ca. 19 μm dicken Basisschicht aus Polypropylen und jeweils auf beiden Oberflächen der Basisschicht siegelbare Deckschichten mit Dicken von ungefähr 0,5 bis 0,8 μm.

Die Siegelschichten bestanden aus

a) 79,3 Gew.-% statistischem Copolymeren aus Ethylen und Propylen mit einem Ethylengehalt von 4,5 Gew.-%, bezogen auf die Menge des Copolymeren,

b) 10 Gew.-% Propylen-Polymerem mit einem Schmelzpunkt von 162°C,

c) 0,7 Gew.-% Polydimethylsiloxan einer kinematischen Viskosität von 30 000mm²/s bei 25°C,

d) 10 Gew.-% Arkon $^{(R)}$ P 125, einem hydrierten Kohlenwasserstoffharz mit einem Erweichungspunkt von 125°C,

e) 0,5 Gew.-% blattförmigem Aluminiumsilikat mit einem mittleren Teilchendurchmesser von 0,5 bis 0,6 μm.

Die Überlegenheit der erfindungsgemäßen Folie entsprechend Beispiel 1 geht aus der Tabelle deutlich hervor.

Tabelle: Folieneigenschaften

| Beispiel | Glanz (%) $\frac{S1+S2}{2}$ | Trübung (%) vierlagig | KE (%) $\frac{S1+S2}{2}$ | Antistatik | MV | MKH |
|---|---|---|---|---|---|---|
| Beispiel 1 | 120 | 18 | 12 | + | ++ | ++ |
| Beispiel 2, Vergleichsbeispiel | 105 | 21 | 21 | – | ++ | ++ |

S = Seite
KE = Kratzempfindlichkeit
MV = Maschinengängigkeit an der Verpackungsmaschine
MKH = Maschinengängigkeit beim Konfektionieren

++ = sehr gut
+ = gut
– = ungenügend

## Patentansprüche

1. Siegelbare, transparente Mehrschichtfolie, bestehend aus einer Basisschicht aus im wesentlichen Polypropylen, die auf ihren beiden Oberflächen mit Schichten aus Polypropylen überzogen ist, welches als Zuschlagstoffe
i) 0, 1 bis 1 Gew.-% eines anorganischen Pigmentes und
ii) 0, 2 bis 1 Gew.-% eines Oxyalkylamins enthält, bezogen jeweils auf das Gesamtgewicht der Schichten, wobei beide freien Oberflächen der Schichten aus Polypropylen mit siegelbaren Deckschichten überzogen sind, die aus einer Kombination von

a) 68, 5 bis 89, 7 Gew.-% einer Olefinharzzusammensetzung, bestehend aus einem Co- oder Terpolymeren aus Ethylen, Propylen, Butylen oder weiteren α-Olefinen mit 5 bis 10 C-Atomen oder Mischungen daraus,

b) 5 bis 15 Gew.-% eines niedermolekularen, mit der Olefinharzzusammensetzung verträglichen Harzes,

c) 5 bis 15 Gew.-% eines Propylenhomopolymeren mit einer Schmelztemperatur, die oberhalb der Schmelztemperatur der unter a) genannten Olefinharzzusammensetzung liegt, und d) 0,3 bis 1,5 Gew.-% eines Polydiorganosiloxans, bezogen jeweils auf das Gesamtgewicht der siegelbaren Deckschichten, bestehen.

2. Mehrschichtfolie nach Anspruch 1, dadurch gekennzeichnet, daß als Komponente b) der siegelbaren Deckschichten ein niedrigmolekulares Harz aus der Gruppe der Kohlenwasserstoffharze oder Kolophoniumharze enthalten ist.

3. Mehrschichtfolie nach Anspruch 1, dadurch gekennzeichnet, daß als Komponente d) der siegelbaren Deckschichten ein Polydiorganosiloxan einer kinematischen Viskosität von mindestens 100 mm2/s bei 25°C enthalten ist.

4. Mehrschichtfolie nach Anspruch 1, dadurch gekennzeichnet, daß als Komponente i) der Polypropylenschicht ein anorganisches Pigment mit einem mittleren Teilchendurchmesser von 0,1 bis 3,0, insbesondere 0,2 bis 1,5 μm, eingesetzt wird.

5. Mehrschichtfolie nach einem der Ansprüche 1 bis 4, dadurch gekennzeichnet, daß die Mehrschichtfolie biaxial streckorientiert ist und eine Gesamtdicke von 10 bis 50 μm, vorzugsweise von 15 bis 35 μm, besitzt.

6. Mehrschichtfolie nach einem der Ansprüche 1 bis 5, dadurch gekennzeichnet, daß die Schichtdicken der siegelbaren Deckschichten kleiner als 3 μm, vorzugsweise zwischen 0,2 und 1 μm, ist.

7. Mehrschichtfolie nach einem der Ansprüche 1 bis 6, dadurch gekennzeichnet, daß die Schichtdicken der Schichten aus Polypropylen mit Zuschlagstoffen kleiner als 3 μm, vorzugsweise zwischen 0,5 und 1,5 μm, ist.

8. Verwendung der Mehrschichtfolie nach Anspruch 1 bis 6 als Verpackungsfolie auf schnellaufenden Einschlagmaschinen.

## Claims

1. A sealable, transparent multilayer film consisting of a base layer, essentially of polypropylene, which is coated on both surfaces with layers of polypropylene which contains, as additives

i) 0.1 to 1 % by weight of an inorganic pigment and

ii) 0.2 to 1 % by weight of an oxyalkylamine, in each case relative to the total weight of the layers, both free surfaces of the polypropylene layers being coated with sealable covering layers which consist of a combination of

a) 68.5 to 89.7 % by weight of an olefin resin composition comprising a copolymer or terpolymer of ethylene, propylene, butylene or further α-olefins of 5 to 10 carbon atoms or mixtures of these,

b) 5 to 15 % by weight of a low molecular weight resin compatible with the olefin resin composition,

c) 5 to 15 % by weight of a propylene homopolymer having a melting temperature which is higher than the melting temperature of the olefin resin composition specified under a), and

d) 0.3 to 1.5 % by weight of a polydiorganosiloxane, in each case relative to the total weight of the sealable covering layers.

2. The multi-layer film as claimed in claim 1, characterized in that component b) of the sealable covering layers is a low molecular weight resin from the group of the hydrocarbon resins or rosins.

3. The multi-layer film as claimed in claim 1, characterized in that component d) of the sealable covering layers is a polydiorganosiloxane having a kinematic viscosity of at least 100 mm2/s at 25 °C.

4. The multi-layer film as claimed in claim 1, characterized in that component i) of the polypropylene layer is an inorganic pigment having a mean particle diameter of 0.1 to 3.0, especially 0.2 to 1.5, μm.

5. The multi-layer film as claimed in any of claims 1 to 4, characterized in that said multi-layer film is biaxially stretch-oriented and has a total thickness of 10 to 50 μm, preferably of 15 to 35, μm.

6. The multi-layer film as claimed in any of claims 1 to 5, characterized in that the thickness of each sealable covering layer is less than 3 μm and preferably between 0.2 and 1 μm.

7. The multi-layer film as claimed in any of claims 1 to 6, characterized in that the thickness of the layers of polypropylene plus additives is less than 3 μm and preferably between 0.5 and 1.5 μm.

8. Use of the multi-layer film as claimed in any of claims 1 to 6 as a packaging film on highspeed wrapping machines.

## Revendications

1. Pellicule multicouche transparente scellable, constituée d'une couche de base essentiellement en polypropylène, recouverte sur ses deux faces de couches de polypropylène, qui renferme comme additifs:

i) 0,1 à 1% en poids d'un pigment inorganique, et

ii) 0,2 à 1% en poids d'une oxyalkylamine,

chaque fois par rapport au poids total des couches, les deux faces libres des couches de polypropylène étant recouvertes de couches de couverture scellables, constituées d'une combinaison de

a) 68,5 à 89,7% en poids d'une composition de résine oléfinique formée d'un co- ou terpolymère d'éthylène, propène, butène ou d'autres α-oléfines à 5 à 10 atomes de carbone, ou bien leurs mélanges,

b) 5 à 15% en poids d'une résine de faible masse moléculaire compatible avec la composition de résine oléfinique,

c) 5 à 15% en poids d'un homopolymère de propène ayant une température de fusion supérieure à la température de fusion de la composition de résine oléfinique mentionnée sous a), et

d) 0,3 à 1,5% en poids d'un polydiorganosiloxane, chaque fois par rapport au poids total des couches de couverture scellables.

2. Pellicule multicouche selon la revendication 1, caractérisée en ce qu'elle renferme, comme composant b) des couches de couverture scellables, une résine de faible masse moléculaire du groupe des résines d'hydrocarbures ou des résines de colophane.

3. Pellicule multicouche selon la revendication 1, caractérisée en ce qu'elle renferme, comme composant d) des couches de couverture scellables, un polydiorganosiloxane de viscosité cinématique égale à au moins 100 mm$^2$/s à 25°C.

4. Pellicule multicouche selon la revendication 1, caractérisée en ce qu'elle renferme, comme composant i) de la couche de polypropylène, un pigment inorganique de diamètre particulaire moyen 0,1 à 3,0, plus particulièrement 0,2 à 1,5 μm.

5. Pellicule multicouche selon l'une des revendication 1 à 4, caractérisée en ce que ladite pellicule de polypropylène est orientée biaxialement et possède une épaisseur totale de 10 à 50 μm, de préférence 15 à 35 μm.

6. Pellicule multicouche selon l'une des revendications 1 à 5, caractérisée en ce que les épaisseurs de couches des couches de couverture scellables sont inférieures à 3 μm, de préférence comprise entre 0,2 et 1 μm.

7. Pellicule multicouche selon l'une des revendications 1 à 6, caractérisée en ce que les épaisseurs de couches des couches de polypropylène avec additifs sont inférieures à 3 μm, de préférence comprises entre 0,5 et 1,5 μm.

8. Emploi de la pellicule multicouche selon l'une des revendications 1 à 6, comme pellicule d'emballage sur machines d'emballage rapides.